Europäisches Patentamt

European Patent Office

Office européen des brevets

(19)

(11) Veröffentlichungsnummer: **0 296 256 B1**

# EUROPÄISCHE PATENTSCHRIFT

(12)

(45) Veröffentlichungstag der Patentschrift: **27.12.91**

(51) Int. Cl.⁵: **A01K 11/00**, A01K 5/02

(21) Anmeldenummer: **87108877.9**

(22) Anmeldetag: **22.06.87**

(54) **Verfahren und Einrichtung zur automatischen Identifizierung von Tieren.**

(43) Veröffentlichungstag der Anmeldung:
**28.12.88 Patentblatt 88/52**

(45) Bekanntmachung des Hinweises auf die
Patenterteilung:
**27.12.91 Patentblatt 91/52**

(84) Benannte Vertragsstaaten:
**AT CH DE ES FR GB GR IT LI NL SE**

(56) Entgegenhaltungen:
**EP-A- 0 176 120**
**GB-A- 1 562 193**
**US-A- 4 537 150**
**US-A- 4 597 495**

(73) Patentinhaber: **WEDA-Dammann & Westerkamp GmbH**

**W-2849 Goldenstedt 2 - Lutten(DE)**

(72) Erfinder: **Fahlbusch, Klaus
Paul Keller Strasse 19
W-2848 Vechta i. o.(DE)**

(74) Vertreter: **Busse & Busse Patentanwälte
Postfach 1226 Grosshandelsring 6
W-4500 Osnabrück(DE)**

**Beschreibung**

Die Erfindung bezieht sich auf eine Einrichtung zur automatischen Identifizierung von Tieren in einer Ausbildung gemäß den Oberbegriff des Anspruchs 1.

Die automatische Identifizierung von Tieren ist insbesondere bei einem automatisierten Fütterungsbetrieb mit elektronisch steuerbarer, tierspezifischer Futterausgabe Voraussetzung, um den einzelnen Tieren die jeweils zugedachten Futterrationen verabreichen zu können. Bei bekannten automatisierten Futterstationen verden Identifiziereinrichtungen mit Signalgebern eingesetzt, die durch am Tier befestigte Halsband- oder Ohrmarkensender gebildet sind. Die Sender geben nach Betreten der Futterstationen an einen Empfänger ein tierspezifisches Signal ab, das der Datenverarbeitungsvorrichtung nach entsprechender Auswertung die Steuerung der jeweiligen individuellen Futterzuteilung ermöglicht. Da die Sender mit elektrischer Energie zu versorgen sind, stehen jedoch aufgrund der beschränkten Möglichkeiten der Energieversorgung an den Tieren nur geringe Sendeleistungen zur Verfügung, so daß ein Sendersignal nur empfangen werden kann, wenn sich Sender und Empfänger in einem hinreichend kleinen Abstand zueinander befinden. Zur Identifizierung der Tiere einer Herde ist jedes Tier mit einem solchen Sender zu versehen, die eine nur begrenzte Lebensdauer haben und im übrigen leicht verloren gehen bzw. bei Rangeleien beschädigt werden können, so daß nicht nur erhebliche Anfangsinvestitionen anfallen, sondern auch laufende Kosten in nicht unbeträchtlicher Höhe anstehen.

Aus der EP-A-01 76 120 ist eine Einrichtung der eingangs genannten Art bekannt, mit der mittels einer Kamera auf optischem Wege Lichtstrahlen zur Identifizierung von Tieren verarbeitet werden. Bei einer derartigen Einrichtung können auch über größere Abstände die tierspezifischen Codierungen erkannt werden. Die Codierungsträger sind hier mit einer farbigen Codierung versehen, die zwar im Regelfall sicher von der Kamera erfaßbar sind, jedoch z. B. im Fall von Verschmutzung von der kamera mitunter nicht mehr exakt erfaßt werden kann.

Es ist Aufgabe der vorliegenden Erfindung, die Einrichtung der eingangs genannten Art dahingehend weiterzubilden, daß auch im Falle von Schmutzanfall von der Kamera die Codierung noch sicher erkannt werden kann. Zur Lösung dieser Aufgabe zeichnet sich die Erfindung durch die im kennzeichnenden Teil des Anspruchs 1 eingegebenen Merkmale aus. Hinsichtlich wesentlicher Ausgestaltungen der Erfindung wird auf die Ansprüche 1 bis 3 verwiesen.

Aufgrund der durch unterschiedlich wärmeleitende Bereiche ausgebildeten Codierung kann die Kamera für infrarotes Licht selbst dann noch die tierspezifischen Signale über größere Strecken sicher erkennen, wenn der Codierungträger verschmutzt sein sollte, da die Temperaturstrahlen sich auch bei anhaftendem Schmutz noch sicher unterscheiden lassen.

Weitere Einzelheiten ergeben sich aus der Zeichnung und der nachfolgenden Beschreibung. Die Zeichnungen zeigen:

Fig. 1    in einer schematischen Seitenansicht eine mit einer Identifizierungseinrichtung ausgerüstete Fütterungskäfigbox für Schweine;

Fig. 2    eine Draufsicht auf die in Fig. 1 veranschaulichte Fütterungskäfigbox;

Fig. 3    eine Draufsicht auf einen plakettenartigen, mit einer Codierungsrasterung versehenen Codierungsträger, und

Fig. 4    den in Fig. 3 veranschaulichten Codierungsträger mit tierspezifischer Auslegung von Rasterungsteilen.

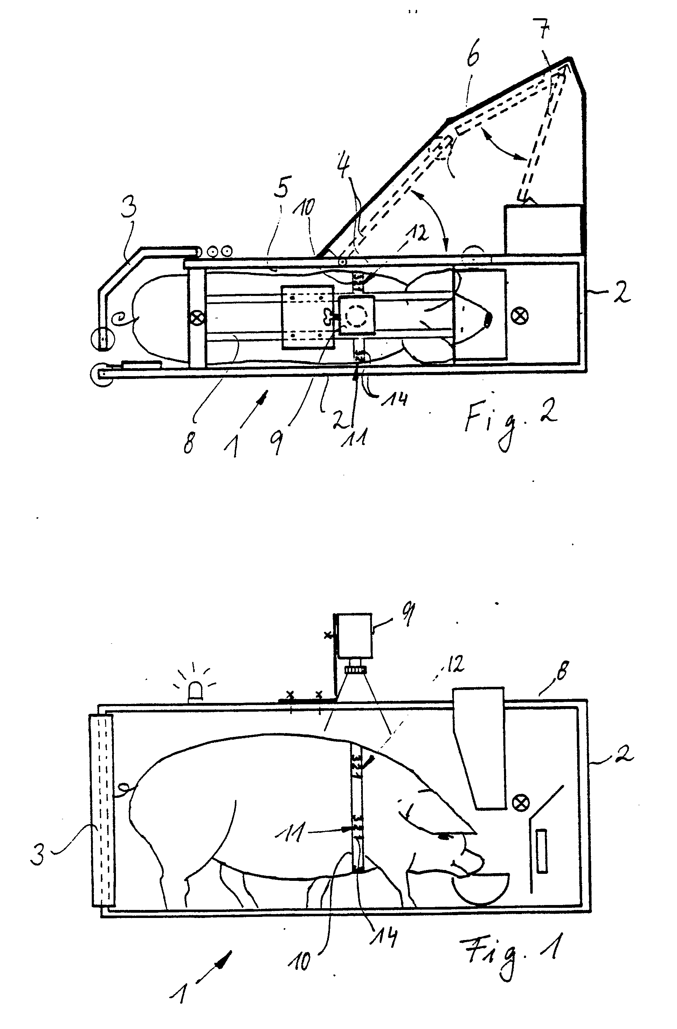

Die in den Figuren 1 und 2 veranschaulichte Fütterungskäfigbox für Schweine 1 hat einen von Seitenwandungsteilen 2 sowie einem Einlaßschwenktor 3 und einem Auslaßschwenktor 4 umgrenzten Käfigraum 5. Im einzelnen nicht dargestellt soll die Futterzuteilung von einer Datenverarbeitungseinheit elektronisch tierspezifisch gesteuert erfolgen. In dem veranschaulichten Ausführungsbeispiel öffnet das Auslaßschwenktor 4 in einen eine separiervorrichtung bildenden Austrittsbereich 6. Die Separiervorrichtung hat ein Separierschwenktor 7, so daß das Tier nach Verlassen der Box beispielsweise entweder zurück in die Herde oder aus der Herde herausgenommen werden kann.

Auf die den Käfigraum 5 nach oben hin abgrenzenden Wandungsteile 8 ist eine Kamera 9 montiert, die - im einzelnen nicht näher dargestellt - mit der eine Auswerteeinheit umfassende elektrische Datenverarbeitungsvorrichtung verbunden ist. Das in den Fig. 1 und 2 in der Käfigbox befindliche Tier trägt einen Schultergurt 10, der an mehreren Stellen eine optisch von der Kamera erfaßbare, sowie visuell wahrnehmbare Codierung 11 in Form einer Ziffernfolge hat und den Signalgeber bildet. In dem veranschaulichten Anführungsbeispiel ist der Schultergurt 10 mit einzelnen Klebefolien beklebt, die die Codeziffernfolge beinhalten. Die von den Lichtstrahlen des andersfarbigen Hintergrundes des Schultergurtes 10 von der Kamera 9 unterscheidbaren Lichtstrahlen der Codierung 11 sind schon durch Tageslicht oder künstliche Lichtquelle zu erzeugen und auch noch von der Kamera 9 über größere Distanzen zu erfassen. Die Einrichtung ist daher insbesondere für die beschriebenen automatischen Fütterungsanlagen, die auch vielfach als Abruffütterstationen bezeichnet werden, geeignet, da aufgrund der sicheren Identifizierung auch von nicht optimal in der Box plazierten Tieren ein reibungsloser Fütterungsbetrieb gewährleistet ist.

Durch die mit Abstand voneinander vorgesehenen Codierungen 11 ist eine Codeziffernfolge auch bei einem eventuellen Verrutschen des Schultergurtes 10 von der Kamera noch sicherer optisch zu erfassen.

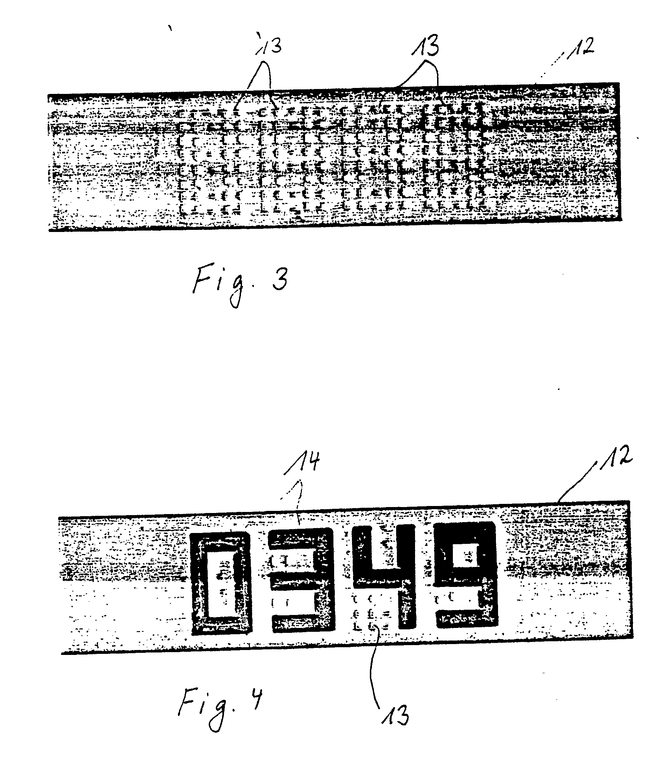

Das von der Kamera 9 optisch erfaßte Lichtstrahlungssignal wird zweckmäßigerweise optisch gefiltert, digitalisiert und der Datenverarbeitungsvorrichtung zur Fütterungssteuerung zugeordnet. Wie die in den Fig. 3 und 4 gezeigten Codierungsträger in Gestalt selbstklebender Folien veranschaulichen, lassen sich tierspezifische Signalgeber auf einfachste und kostengünstigste Weise vom Benutzer selbst herstellen. Dazu haben die Codierungsträger nach den Fig. 3 und 4 eine vorgegebene Codierungsrasterung 13. Der Benutzer kann durch farbige Auslegung bzw. Schwärzung von den gewünschten Codeziffern bildenden Rasterungsteilen den Signalgeber herstellen sowie am Tier anbringen und somit auf Vorrat halten und je nach Bedarf, beispielsweise bei Vergrößerung seiner Herde oder bei Verlust eines Codierungsträgers in Benutzung nehmen. Gegenüber bekannten Ohrmarken- bzw. Halsbandsendern sind die Kosten für den Signalgeber bildende Codierungsträger 12 mit der optisch erfaßbaren Codierung minimal. Durch den Entfall von an den Tieren anzubringenden elektrischen,störanfälligen und energiebeanspruchenden Bauteilen ist das Ausfallrisiko der Einrichtung nach der Erfindung außerordentlich gering.

Als optisch von einer Kamera erfaßbare Strahlen lassen sich auch die Körpertemperaturstrahlen des zu identifizierenden Tieres nutzen. Dazu ist eine Kamera 9 für infrarotes Licht in dem veranschaulichten Ausführungsbeispiel nach den Figuren 1 und 2 vorzusehen und der Signalgeber zweckmäßigerweise mit einem Codierungsträger zu versehen, der aus einem wärmeisolierenden Material besteht. In diesen Codierungsträger können der Codierung entsprechende Durchbrüche, beispielsweise mit Codeziferngestalt eingebracht werden, so daß die durch die Durchbrüche gelangende codierte Strahlung sicher von der Infrarotkamera auch über größere Distanzen zu erfassen ist.

## Patentansprüche

1.  Einrichtung zur automatischen Identifizierung von Tieren, insbesondere in Fütterungsstationen (1) mit einer elektronisch steuerbaren Futterausgabe, mit einem an dem zu identifizierenden Tier anzuordnenden Signalgeber (12) sowie einem mit einer elektrischen Datenverarbeitungsvorrichtung verbindbaren Signalempfänger, die als Kamera (9) ausgebildet ist, wobei der Signalgeber (12) eine optisch von der Kamera (9) erfaßbare Codierung (11) hat, dadurch gekennzeichnet, daß eine Kamera (9) für infrarotes Licht vorgesehen ist und der Signalgeber (12) zur Ausbildung der Codierung (11) unterschiedlich wärmeleitende Bereiche hat, wobei der Signalgeber (12) einen Durchbrüche in Form der Codierung (12) aufweisenden Codierungsträger aus einem wärmeisolierenden Material aufweist.

2.  Einrichtung nach Anspruch 1, dadurch gekennzeichnet, daß der Codierungsträger (12) elastisch ausgebildet und am Tierkörper festklebbar ist.

3.  Einrichtung nach einem der Ansprüche 1 bis 2, dadurch gekennzeichnet, daß der Codierungsträger (12) mittels eines Gurtes (10) am Tierkörper festlegbar ist.

## Claims

1.  A means for the automatic identification of animals, particularly in feeding stations (1) with an electronically controllable feed delivery, with a signal transmitter (12) to be disposed on the animal to be identified and, adapted to be connected to an electrical data processing device, a signal receiver which is constructed as a camera (9), the signal transmitter (12) having a coding (11) which can be detected optically by the camera (9), characterised in that a camera (9) for infra-red light is provided, the signal transmitter (12) having, to form the coding (11), variously heat-conductive zones, the signal transmitter (12) comprising a coding carrier consisting of a heat-insulating material and having apertures in the form of the coding (12).

2.  A means according to Claim 1, characterised in that the coding carrier (12) is of elastic construction and can be securely fastened to the body of the animal by adhesion.

3.  A means according to one of Claims 1 to 2, characterised in that the coding carrier (12) can be fixed to the body of the animal by means of a belt (10).

## Revendications

1.  Installation d'identification automatique d'animaux en particulier dans des postes d'alimentation (1) avec distribution d'aliments en commande électronique, avec un générateur de signaux (12) placé sur l'animal à identifier ainsi qu'un récepteur de signal susceptible d'être relié électriquement au dispositif de traitement de données, ce récepteur contenant une caméra (9) et le générateur de signal (12) un code (11) susceptible d'être lu de manière optique par la caméra (9), installation caractérisée par une caméra (9) en lumière infrarouge et le générateur de signal (12) pour former le code (11) présente des zones à conductibilité différente, le générateur de signal (12) ayant des trous correspondant à la forme du code (12) dans le support de code réalisé lui-même en un matériau isolant thermiquement.

2. Installation selon la revendication 1, caractérisée en ce que le support de code (12) est élastique et se colle sur le corps de l'animal.

3. Installation selon l'une des revendications 1 et 2, caractérisée en ce que le support de code (12) est fixé sur le corps de l'animal à l'aide d'une ceinture (10).

Fig. 2

Fig. 1

Fig. 3

Fig. 4